# EUROPÄISCHE PATENTSCHRIFT

(11) **EP 1 156 577 B1**
(45) Veröffentlichungstag und Bekanntmachung des Hinweises auf die Patenterteilung: **30.11.2005**
(21) Anmeldenummer: 01111529.2
(22) Anmeldetag: 11.05.2001
(51) Int. Cl.: H02K 15/02, H02K 1/18, H02K 15/14

(54) **Verfahren zum Befestigen eines Stators in einem Gehäuse**
Method for fastening a stator in a housing
Procédé pour fixer un stator dans un boîtier

(30) Priorität: 15.05.2000 DE 10023313
(43) Veröffentlichungstag der Anmeldung: 21.11.2001
(73) Patentinhaber: WILLY VOIT GMBH & Co., D-66386 St Ingbert (DE)
(72) Erfinder: Hantke, Ulrich, 66386 St. Ingbert (DE); Schmitt, Rainer, 66386 St. Ingbert (DE)
(74) Vertreter: Vièl, Christof

(56) Entgegenhaltungen:
- DE-A- 1 763 613
- DE-A- 2 810 215
- US-A- 3 497 735
- US-A- 4 404 483
- US-A- 5 090 109
- PATENT ABSTRACTS OF JAPAN vol. 008, no. 181 (E-261), 21. August 1984 (1984-08-21) -& JP 59 072967 A (HITACHI SEISAKUSHO KK), 25. April 1984 (1984-04-25)

## Beschreibung

Die Erfindung betrifft ein Verfahren zum Befestigen eines Stators in einem Gehäuse sowie die Verwendung eines Gehäuses mit einem darin befestigten Stator.

Aus der DE 37 07 422 A1 ist ein Verfahren zur Befestigung des Ständerpaketes bei einem elektrischen Generator bekannt, wobei am Außenumfang des Ständerpaketes ein Spannring angeordnet wird, dieser mindestens an vorgegebenen Stellen mit dem Ständerpaket fest verbunden wird und beidseitig Generatorgehäuseteile lediglich am Spannring zur Anlage gebracht werden, die dann miteinander verspannt werden. Diese Art der Ausführung ist zeitaufwendig und erfordert zahlreiche Einzelteile, was in logistischer Hinsicht von Nachteil ist.

Die DE 29 49 304 A1 beschreibt ein Verfahren zur Herstellung eines Gehäuses für einen elektrischen Motor, wobei der Ständer auf dem Kern eines Dornes bis zum Anliegen des Blechpaketes an dessen Flansch aufgeschoben wird, danach ein zweiter Dorn auf den ersten Dom aufgesteckt wird und anschließend ein erwärmtes, aus einem dünnwandigen metallischen Blech bestehendes, zum Gehäuse bestimmtes Rohr auf die aus Ständer und ineinandergesteckte Dorne bestehende Einheit aufgeschoben und durch Abkühlen aufgeschrumpft wird und zuletzt die Dorne entfernt werden. Dieses Verfahren ist noch aufwendiger als das oben beschriebene und kommt für die Fertigung von Massenteilen daher nicht in Frage.

Aus der DE 30 41 344 A1 ist ein Verfahren zur Fertigung eines Elektromotors bekannt, wobei zunächst am Außenumfang des Ständers mindestens zwei Axialnuten vorgesehen werden, welche im Abstand von dem bzw. jedem ein Lagerschild tragenden Ständerende mit radialen Kanten enden, wobei daraufhin der Lagerschild bzw. jeder Lagerschild über die radialen Kanten hinaus auf das jeweilige Ständerende aufgeschoben wird und daß Bereiche des kragenförmigen Ansatzes des bzw. jedes Lagerschilds in die Nuten bis zu den radialen Kanten der Axialnuten zur Sicherung des Lagerschilds gegen Axialverschiebung und Drehung eingedrückt werden. Diese Lösung ist zwar einfacher, erfordert jedoch immer noch eine komplizierte Handhabung und das Vorsehen der axialen Nuten in dem Ständer.

Aus der DE 28 10 215 C3 ist ein Verfahren zum Aufbringen eines zusätzlichen Rückschlusses auf das Gehäuse eines elektrischen Motors bekannt, wobei um die zylindrische, aus einem Blechstreifen gebogene Wandung eines Gehäuses eines elektrischen Kleinmotors ein Blechstreifen herumgebogen und in dieser Lage vollkommen spielfrei durch Kraftschluß festgelegt wird. Für das Befestigen eines Stators in einem Gehäuse eignet sich dieses Verfahren jedoch nicht, da die Gefahr der Beschädigung des Stators während des Aufbringens des Gehäuses um den Stator zu groß wäre.

Die US 3,497,735 A beschreibt einen Elektromotor, der zumindest teilweise mit Hilfe eines Geschwindigkeits-Umformverfahrens, insbesondere des Magneformverfahrens montiert wird. Hierzu werden zwei topfförmige Lagerschilde mit ihrem hohlzylindrischen Teil mit Hilfe des Umformverfahrens auf dem aktiven Teil des Ständers, insbesondere dem Ständerblechpaket, befestigt.

Der Erfindung liegt daher die Aufgabe zugrunde, ein Verfahren zu schaffen, mit dem auf einfache Weise ein Stator in einem Gehäuse befestigt werden kann.

Diese Aufgabe wird erfindungsgemäß durch ein Verfahren mit folgenden Schritten gelöst:
- Herstellen eines Gehäuses aus einem Blechstreifen mittels Biegen, wobei die nach dem Biegen sich berührenden, schwalbenschwanzähnlich ausgebildeten Endkanten des Blechstreifens unter Bildung eines Fügespaltes ineinandergreifen und der Innendurchmesser des Gehäuses größer als der Außendurchmesser des Stators ist,
- Einbringen des Stators in das Gehäuse durch die obere oder die untere Öffnung und Positionieren des Stators,
- Schließen des Fügespaltes durch Anpressen der Gehäusewandung an den Stator bis zum Erreichen einer kraftschlüssigen Verbindung.

Hierdurch wird es möglich, in einem spanlosen Montageverfahren (ohne Gewindeschneiden etc.) und ohne Zusatzteile den Stator zuverlässig mit dem Gehäuse zu verbinden, ohne daß die Gefahr besteht, den Stator während des Montageverfahrens zu beschädigen. Dadurch, daß der Stator aufgrund des Fügespaltes leicht in das Gehäuse eingebracht werden kann, welches jedoch zu diesem Zeitpunkt bereits formstabil ist, ist der Montageaufwand sehr gering. Anschließend muß lediglich noch der Fügespalt geschlossen und hierbei die kraftschlüssige Verbindung zwischen Gehäuse und Stator hergestellt werden. Insbesondere wenn Gehäuse und Stator an unterschiedlichen Orten hergestellt werden, ist dieses Verfahren mit seinem zweistufigen Schließen des Gehäuses von Vorteil, da beide Teile unabhängig voneinander hergestellt und anschließend leicht miteinander verbunden werden können. Bei dem in der DE 28 10 215 C3 beschriebenen Verfahren ist dies nicht möglich, da das Gehäuse bei Anwendung dieses Verfahrens um den Stator gebogen werden müßte.

Eine Weiterbildung des Verfahrens besteht darin, daß an der Innenseite des Gehäuses und/oder der Außenseite des Stators Profilierungen vorgesehen sind, die eine zusätzliche formschlüssige Verbindung von Gehäuse und Stator ermöglichen.

Auf diese Art und Weise können Stator und Gehäuse neben der während des Anpreßvorganges entstehenden kraftschlüssigen Verbindung zusätzlich durch eine formschlüssige Verbindung gesichert werden. Die Profilierungen können beispielsweise als Erhebungen oder Vertiefungen in axialer oder radialer Richtung ausgebildet sein.

Eine andere Ausbildung der Erfindung besteht darin, daß sich das Gehäuse in axialer Richtung jeweils über das Ende des Stators hin erstreckt.

Während des die Verbindung erzeugenden Anpreßvorganges können sich je nach Härte des verwendeten Materials aufgrund des Materialflusses Wulste an der Innenseite der Gehäusewand ausbilden, durch die der Stator formschlüssig in dem Gehäuse gegen axiales Verschieben gesichert ist.

Im Rahmen der Erfindung liegt die Verwendung eines gemäß des erfindungsgemäßen Verfahrens hergestellten Gehäuses mit einem darin befestigten Stator als Gehäuse für einen Generator oder Elektromotor.

Insbesondere für die Automobilindustrie werden solche Gehäuse in großen Mengen benötigt, so daß eine kostengünstige und qualitativ hochwertige Fertigung erforderlich ist.

Im folgenden werden Ausführungsbeispiele der Erfindung anhand von Zeichnungen erläutert.

Es zeigen
- Fig. 1a und 1b: das Herstellen eines Gehäuses aus einem Blechstreifen jeweils in Seitenansicht und Draufsicht,
- Fig. 2: einen Stator zum Einbringen in das Gehäuse in Seitenansicht und Draufsicht,
- Fig. 3: das Einbringen des Stators in das Gehäuse in Seitenansicht,
- Fig. 4: das Gehäuse mit darin befestigtem Stator in Seitenansicht und geschnittener Darstellung.

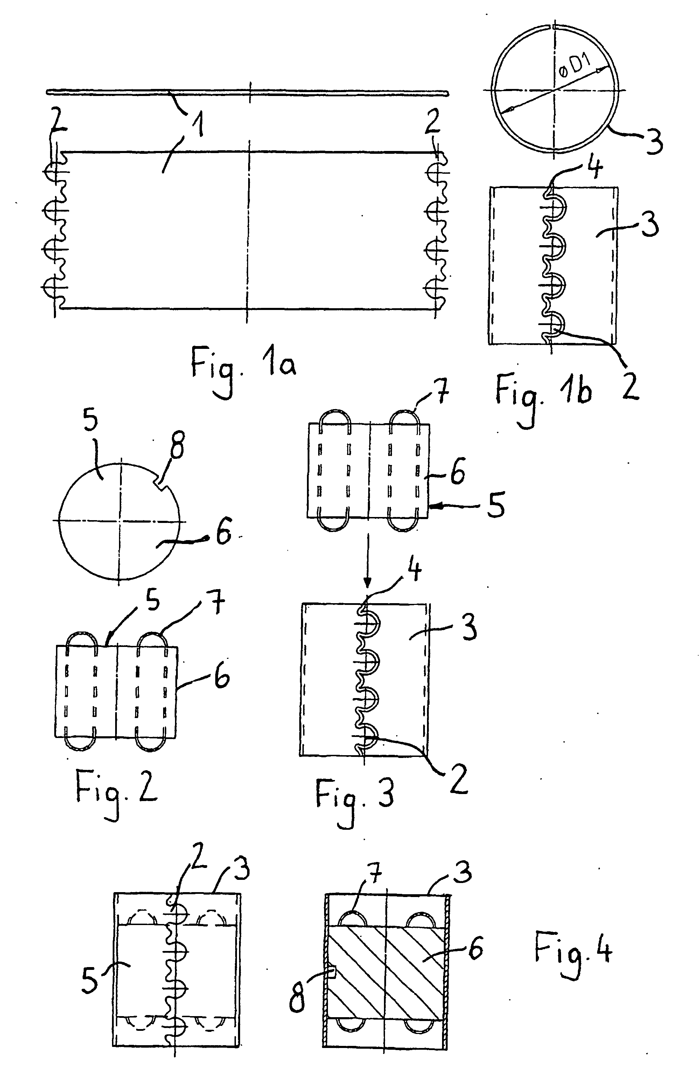

Wie aus Fig. 1a hervorgeht, wird das Gehäuse 3 aus einem Blechstreifen 1 durch Biegen hergestellt, dessen beim Biegevorgang sich berührende Endkanten 2 schwalbenschwanzförmig ausgebildet sind, so daß die Endkanten 2 formschlüssig ineinandergreifen können. Die Ausbildung der Endkanten 2 muß so sein, daß bei Zusammenfügen der Endkanten 2 zunächst in radialer Richtung noch ein Fügespalt 4 bestehen bleiben kann, obwohl das Gehäuse 3 bereits formstabil ist. In einem zweiten Schritt muß dieser Fügespalt 4 dann zumindest im wesentlichen schließbar sein.

Im vorliegenden Beispiel wird ein zylindrisches Gehäuse 3 hergestellt, wie es in Fig. 1b dargestellt ist. Dort ist zu erkennen, daß der Fügespalt 4 im Bereich der ineinandergreifenden Endkanten 2 noch nicht ganz geschlossen ist, so daß das Gehäuse 3 zu diesem Zeitpunkt zwar bereits formstabil ist, aber noch einen größeren Innendurchmesser D, als den Außendurchmesser D_{Stator} des darin einzubringenden Stators 5 aufweist.

Dieser Stator 5 ist in Fig. 2 dargestellt und besteht aus einem zylindrischen Körper 6 sowie Wicklungen 7. Der Stator 5 hat zudem eine axiale Profilierung 8 an seiner Außenseite, die später der zusätzlichen formschlüssigen Verbindung mit dem Gehäuse 3 dienen kann.

Wie in Fig. 3 dargestellt, wird nun der Stator 5 in das Gehäuse 3 durch eines der offenen Enden des Gehäuses 3 eingeschoben, was aufgrund des noch bestehenden Fügespaltes 4 und des daraus resultierenden größeren Innendurchmessers des Gehäuses 3 problemlos erfolgen kann.

Nach dem anschließenden Anpreßvorgang ist das Gehäuse 3, wie in Fig. 4 dargestellt, kraftschlüssig mit dem Stator 5 verbunden, der Fügespalt 4 ist nunmehr geschlossen. Zusätzlich wird der Stator 5 in dem Gehäuse 3 durch Materialfluß in seine Profilierungen 8 formschlüssig gesichert.

## Patentansprüche

1. Verfahren zum Befestigen eines Stators in einem Gehäuse, **gekennzeichnet durch** folgende Schritte:
• Herstellen eines Gehäuses (3) aus einem Blechstreifen (1) mittels Biegen, wobei die nach dem Biegen sich berührenden, schwalbenschwanzähnlich ausgebildeten Endkanten (2) des Blechstreifens (1) unter Bildung eines Fügespaltes (4) ineinandergreifen und der Innendurchmesser des Gehäuses (3) größer als der Außendurchmesser des Stators (5) ist,
• Einbringen des Stators (5) in das Gehäuse (3) **durch** die obere oder die untere Öffnung und Positionieren des Stators (5),
• Schließen des Fügespaltes **durch** Anpressen der Gehäusewandung an den Stator (5) bis zum Erreichen einer kraftschlüssigen Verbindung.

2. Verfahren gemäß Anspruch 1, **dadurch gekennzeichnet, daß** an der Innenseite des Gehäuses (3) und/oder der Außenseite des Stators (5) Profilierungen (8) vorgesehen sind, die eine zusätzliche formschlüssige Verbindung von Gehäuse (3) und Stator (5) ermöglichen.

3. Verfahren gemäß Anspruch 1, **dadurch gekennzeichnet, daß** sich das Gehäuse (3) in axialer Richtung jeweils über das Ende des Stators (5) hin erstreckt.

4. Verwendung eines gemäß der Ansprüche 1 bis 3 hergestellten Gehäuses (3) mit einem darin befestigten Stator (5) als Gehäuse für einen Generator oder Elektromotor.

## Claims

1. Method for fastening a stator in a housing, **characterised by** the following steps:
• Manufacturing a housing (3) from a sheet-metal strip (1) by bending, the dovetail-like ends (2) of the sheet-metal strip (1), which after bending are in mutual contact, interlocking to form a joint gap (4), and the internal diameter of the housing (3) being greater than the external diameter of the stator (5),
• Insertion of the stator (5) into the housing (3) through the top or bottom opening therein, and positioning of the stator (5),
• Closing of the joint gap by pressing the housing wall onto the stator (5) until a frictional connection is obtained.

2. The method according to claim 1, **characterised in that** profiles (8) that permit an additional, positive connection between the housing (3) and the stator (5) are provided on the inside of the housing (3) and/or the outside of the stator (5).

3. The method according to claim 1, **characterised in that** the housing (3) extends axially beyond each end of the stator (5).

4. Use of a housing (3) manufactured according to the claims 1 to 3, having a stator (5) fastened therein, as a housing for a generator or an electric motor.

## Revendications

1. Procédé pour fixer un stator dans un carter, **caractérisé par** les étapes suivantes :
- Fabrication d'un carter (3) à partir d'une bande de tôle (1) par cintrage, les bords d'extrémité (2) de la bande de tôle (1) qui se touchent après le cintrage et qui ont une forme semblable à des queues-d'aronde s'emboîtant l'un dans l'autre en formant une fente de séparation (4), et le diamètre intérieur du carter (3) étant plus grand que le diamètre extérieur du stator (5) ;
- introduction du stator (5) dans le carter (3) par l'ouverture supérieure ou l'ouverture inférieure et positionnement du stator (5) ;
- fermeture de la fente de séparation par pressage de la paroi du carter contre le stator (5) jusqu'à l'obtention d'une liaison par friction.

2. Procédé selon la revendication 1, **caractérisé en ce que** des profils (8) sont prévus sur la face intérieure du carter (3) et/ou sur la face extérieure du stator (5) qui permettent une liaison par friction supplémentaire du carter (3) et du stator (5).

3. Procédé selon la revendication 1, **caractérisé en ce que** le carter (3) s'étend en direction axiale au-delà de chaque extrémité du stator (5).

4. Utilisation d'un carter (3) fabriqué selon les revendications 1 à 3 avec un stator (5) fixé à l'intérieur comme carter pour un générateur ou un électromoteur.
